# EUROPEAN PATENT APPLICATION

(11) **EP 1 354 753 A1**
(43) Date of publication of application: **22.10.2003**
(21) Application number: 02008719.3
(22) Date of filing: 18.04.2002
(51) Int. Cl.: B60N 2/06, B60N 2/14, B60N 2/28

(54) **Infant/child vehicle safety seat having improved ergonomics**

(71) Applicant: Ziegler, Douglas K., Dr., Allentown, PA 18102 (US)
(72) Inventor: Ziegler, Douglas K., Dr., Allentown, PA 18102 (US)
(74) Representative: Paul, Dieter-Alfred, Dipl.-Ing.

(57) **Abstract**

The invention describes an infant/child vehicle safety seat (1), comprising: a base (2); a carriage (3) adapted to receive a passenger; and an extendable mechanism (4) attaching said carriage to said base, said extendable mechanism adapted to move said carriage to an outboard passenger loading position and to a passenger riding position.

## Description

### 1. Field of the Invention

The present invention is directed to a safety seat for use in a vehicle, and in particular, the present invention is directed to a vehicle safety seat that includes a carriage adapted to receive an occupant, and a mechanism to extend the carriage to an outboard position when a passenger is being placed into or being removed from the vehicle safety seat.

The evolution of passenger safety, and in particular passenger safety in automobiles, has resulted in the understanding that a safer riding position is the center position on a seat located behind driver's seat of a vehicle. Such central positions within a vehicle are farther removed from the point of impact during a collision, and by the time the impact energy reaches a center passenger, the force of impact has been reduced by the crushing and collapse of structural components within the automobile. For this reason, it is now recommended, and in some instances legislated, that infants and small children must be placed in safety seats that are fastened to the center of a rear car seat. An additional reason for such rear seat requirements is the installation of front seat air bags in automobiles. It has been discovered that the forces associated with inflating automotive air bags can cause serious injury and possible death to children riding in the front seat of a car. Records show that even when a vehicle is involved in only a minor accident, air bag inflation may cause injury to a child riding in a front seat.

However, when vehicle safety seats are fastened to a center seat position, it exposes users to lower back injury when they place infants and children into such centrally located safety seats. For example, the process of placing an infant/child into a safety seat requires the adult user to lift, twist, and extend their upper torso into the passenger compartment of the vehicle in a effort to reach the safety seat. Such improper lifting posture exposes the user to lower back injury due to torsion strain exerted upon their intervertebral disks, particularly in the lumbar spin regardless of whether they are placing the child into the seat or removing the child from the seat. Consequently, individuals using current vehicle safety seats available in today's marketplace run the risk of suffering from lower back pain resulting from lumbar sprain/strain, as well as possible herniation of the intervertebral disks in their lower back. Moreover, postpartum mothers have increased vulnerability to back injury because their abdominal muscles are weak after giving birth. Additionally, it is estimated that about 40 percent of the individuals who do not currently experience low back pain have undetected herinated discs. Although they are unaware of it, such individuals should avoid the above described improper lifting to avoid subjecting their herinated discs to strain. The improved "back saver" vehicle safety seat of the present invention will not only reduce low back strain in such unsuspecting individuals, its improved ergonomics will also benefit individuals currently suffering with low back pain.

### 2. Brief Description of the Related Art

It appears that the art may be silent with respect to providing a more user friendly vehicle safety seat that includes a mechanism for extending and/or rotating the seat portion to improve user ergonomics when placing an infant/child into the vehicle safety seat, or when removing an infant/child from the vehicle safety seat. Three earlier patents, that are not considered prior art by the applicant, disclose exemplary infant safety seats that include removable infant carriers that may be adapted for coupling to the present safety seat invention. The patents are U. S. patent no. 5,997,086 to Gibson, et al, U.S. *5,385,387* to Kain, and U.S. Des. 402,477 to Chone, II. All three patents fail to recognize ergonomic problems associated with using vehicle safety seats, and the combined teaching of the patents fails to suggest safety seat improvements that will become apparent as the description proceeds.

### SUMMARY OF THE INVENTION

It is an object of the present invention to provide a vehicle safety seat having improved ergonomics.

It is a further object of the present invention to improve vehicle safety seat ergonomics by providing a seat portion capable of being extended toward a user placing or removing a passenger of the safety seat.

It is an additional object of the present invention to improve vehicle safety seat ergonomics by providing a seat portion capable of selective rotation to a convenient angle with respect to a user placing or removing a passenger of the safety seat.

It is still another object of the present invention to provide a user-friendly safety seat suited for use with a removable infant carrier.

In satisfaction of the foregoing objects and advantages, the present invention provides an improved safety seat comprising a base for attachment to a vehicle, a carriage adapted to receive a passenger, and an extendable mechanism attaching the carriage to the base to provide means to extend the carriage from a riding position to an outboard loading position when a passenger is being placed into or being removed from the safety seat. The improved safety seat may include a rotatable seat portion that can be selectively rotated to a convenient loading position angle, and the improved safety seat may be adapted to couple to a removable infant carrier.

### BRIEF DESCRIPTION OF THE DRAWINGS

- **Fig. 1**: is an elevation view in cross-section showing a preferred embodiment of the present safety seat invention.
- **Fig. 2**: is a view similar to Figure 1 showing an infant carrier coupled to the base.
- **Fig. 3**: is a view similar to Figure 2 showing the infant carrier rotated to a different position.
- **Fig. 4**: is an enlarged cross-section view of the base shown in Figure 1.
- **Fig. 4a**: is an enlarge cross-section showing an alternate extension mechanism embodiment.
- **Fig. 5**: is a view showing an exemplary carriage lock device.
- **Fig. 6**: is a view taken along the lines 6-6 in Figure 5.
- **Fig. 7**: shows the present safety seat invention positioned for access from the passenger side of a vehicle.
- **Fig. 8**: shows the present safety seat invention positioned for access from the driver side of a vehicle.
- **Fig. 9**: is an elevation view showing an alternate embodiment of the present safety seat invention in its riding position.
- **Fig. 10**: is a view showing the alternate embodiment of Figure 9 in an extended position.
- **Fig. 11**: is an alternate embodiment of the safety seat invention shown in Figure 1.
- **Fig. 12**: is a view of the safety seat in Figure 9 attached to a vehicle seat.
- **Fig. 13**: is another alternate embodiment of the safety seat invention shown in Figure 1.
- **Fig. 14a-14f**: shows various views of the present safety seat invention between its riding position and its extended position.

### DETAILED DESCRIPTION OF THE PREFERRED EMBODIMENT

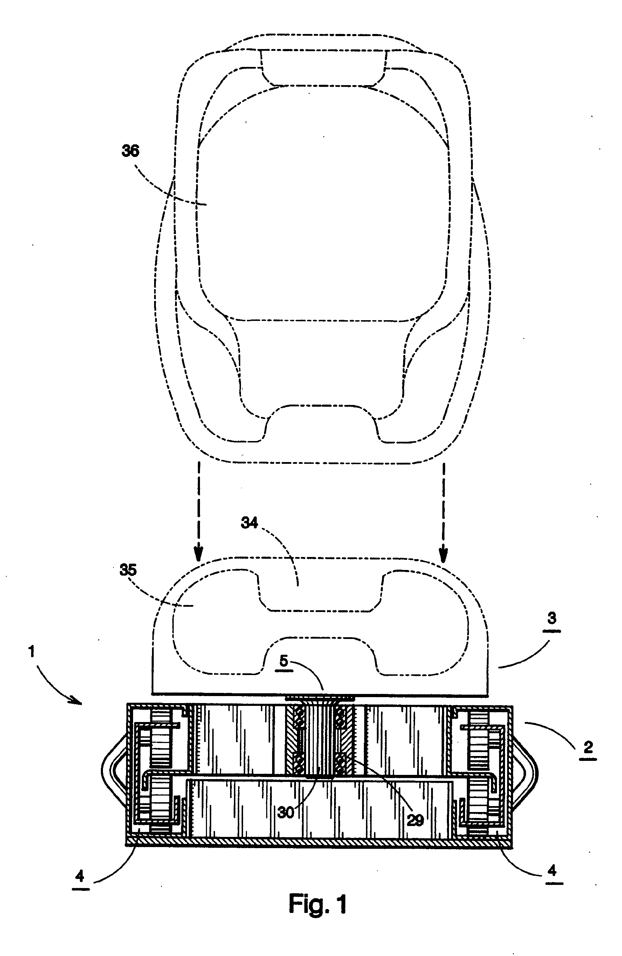

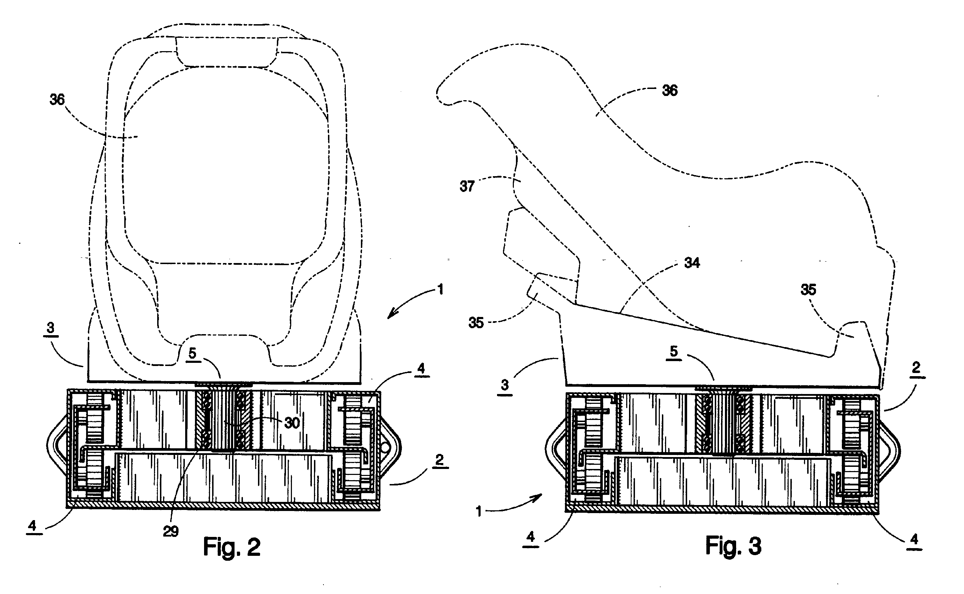

The present invention is directed to a "back saver" vehicle safety seat having improved ergonomics that provide a more user friendly arrangement for placing an infant or child into the safety seat or for removing an infant or child from the safety seat. Referring to Figures 1-4, a preferred embodiment 1 of the present back saver safety seat invention is shown comprising a base 2, a carriage 3, an extendable mechanism 4 for moving carriage 3 between a riding position to an extended position, and a bearing arrangement 5 for rotating carriage 3 about a vertical axis.

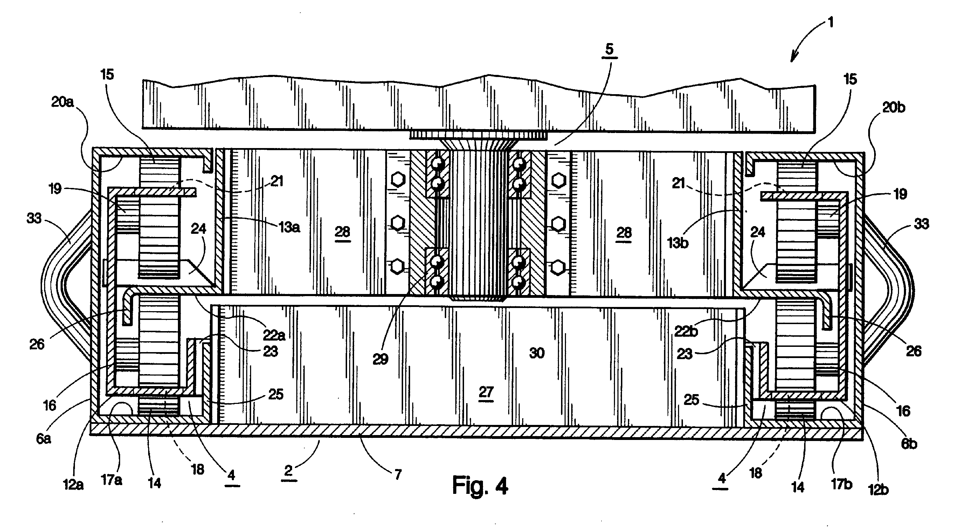

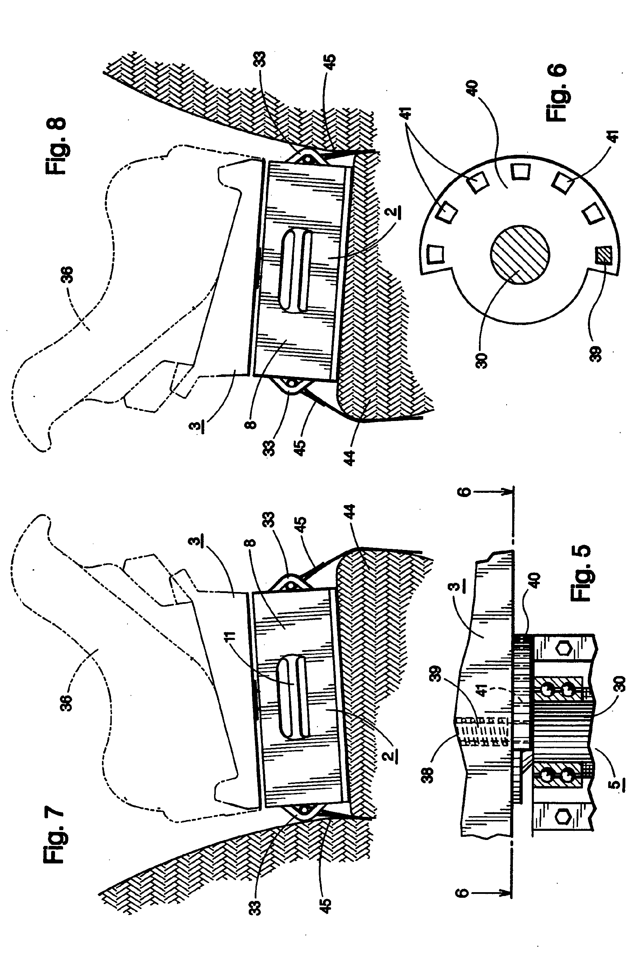

As shown more clearly in the enlarged cross-section view of Figure 4, the base housing 2 includes spaced apart side members 6a and 6b, a bottom plate 7 shaped to be placed on a vehicle seat, a first end plate 8 (Figures 7 and 8) attached to and extending between side members 6a and 6b, a second end plate 9 attached to the extendable mechanism between side members 6a and 6b, and an open space 10 between side members 6a and 6b that provides clearance for connecting carriage 3 to the extendable mechanism 4. As further shown in Figures 7 and 8, a handle 11 may be provided along the outside surface of the second end plate 8 to facilitate operation of the extendable mechanism 4.

The extendable mechanism 4 is positioned within the base housing 2, and in the preferred embodiment, comprises a telescopic arrangement having a first extendable set of rails 12a and 12b moveably coupled to a second set of extendable rails 13a and 13b. Each extendable rail 12a and 12b includes a plurality of lower wheels or bearings 14, and a plurality of upper wheels or bearing 15. The lower wheels 14 are rotatably mounted on axles 16 fastened to rails 12a and 12b, and the wheels engage bottom track surfaces 17a and 17b provided in the side members 6a and 6b respectively. Slots 18 may be provided in the extendable rails 12a and 12b if required in a particular telescopic arrangement to engage wheels 14 against the bottom track surfaces 17a and 17b. Similarly, the upper wheels 15 are rotatably mounted on axles 19 fastened to rails 12a and 12b and the wheels engage upper track surfaces 20a and 20b provided in the side members 6a and 6b respectively. Slots 21 may be provided in the extendable rails 12a and 12b if required in a particular telescopic arrangement to engage wheels 15 against the upper track surfaces 20a and 20b.

Each of the rails 13a and 13b includes a respective track section 22a and 22b The track sections 22a and 22b support the second set of extendable rails on the lower wheels 14 at a position that loosely captures the track sections 22a and 22b between the lower and upper wheels 14 and 15 so that the second set of rails 13a and 13b may be extended or retracted in an outward or inward direction independent of the first set of extendable rails 12a and 12b. Stops 23 on the first set of extendable rails 12a and 12b, and stops 24 on the second set of extendable rails 13a and 13b, prevent longitudinal disengagement of the first and second sets of rails when they are extended in an outward direction with respect to the base 2. Track flanges 25 on the bottom track portions 17a and 17b of the first set of extendable rails 12a and 12b, and track flanges 26 on the track sections 22a and 22b along the second set of extendable rails 13a and 13b, prevent transverse movement and disengagement of the first and second sets of extendable rails when they are moved in either an outward or inward direction.

Optional bracing 27 may be provided to stiffen the base housing 2, and a spider bracket 28, or like device supports a bearing assembly 29 positioned between the spaced apart second set of extendable rails 13a and 13b. The bearing assembly is adapted to receive a spindle 30 and rotatably fasten carriage 3 to the second set of extendable rails 13a and 13b. It should be understood that although the preferred embodiment shows using a ball bearing assembly for rotatably fastening carriage 3 to the second set of extendable rails, any known bearing apparatus may be used without departing from the scope of this invention. For example, spindle 30 may be rotatable fastened within a bushing manufactured from an ultra high molecular weight polymer having a low coefficient of friction such as GAR-DUR®. Additionally the first set of extendable rails 12a and 12b, as well as the second set of extendable rails 13a and 13b may be modified to slide to their extended position on blocks or strips of low coefficient material rather than on wheels or bearings without departing from the scope of this invention. Such slide blocks may be manufactured from, for example, but not limited to, GAR-DUR as illustrated in Figure 4a.

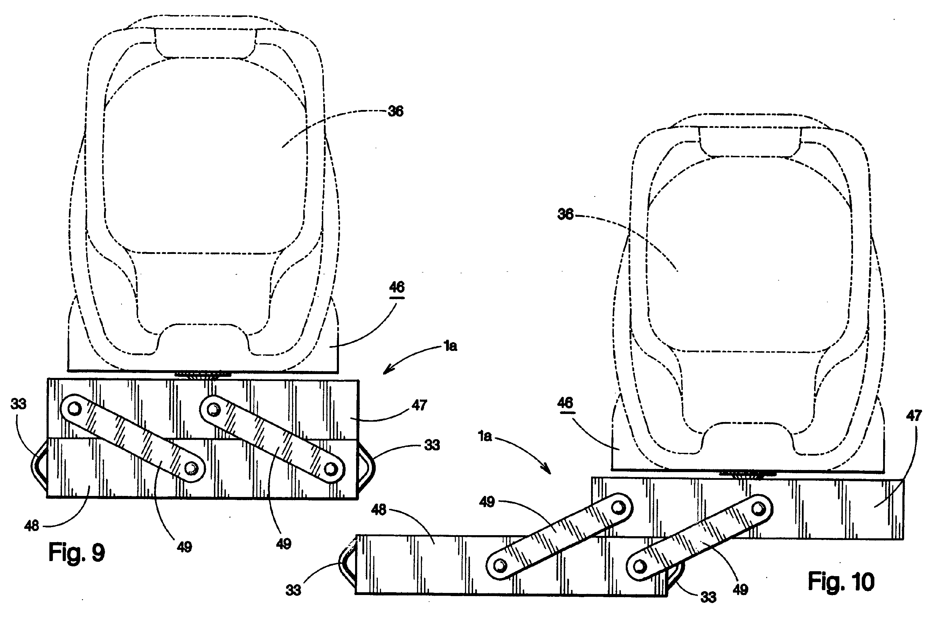

Referring to Figures 7, 8, and 9b, the first end plate 8 provides a cover plate that is fastened to the leading ends 31 of each rail 13a and 13b to provide a finished appearance when the extendable mechanism 4 is placed in its retracted position within base housing 2. Carriage 5 is moved to an extended position outboard from base 2 by grasping handle 11 in cover plate 8 and applying an outward force to extend the second set of rails 13a and 13b outward from the base housing. Referring to Figures 4, 4a, and 9b, the outward force causes rail sections 13a and 13b to extend along the wheels 14, or the alternate slide blocks 32, and the attached carriage 5 follows rails 13a and 13b to their extended outboard position. As rails 13a and 13b roll or slide toward their extended position, tabs 24 engage rails 12a and 12b and force the rails 12a and 12b to extended outward along the wheels 14 and 15, or along the alternate slide blocks 32, in a telescopic fashion that extends carriage 3 to a more distant outboard position base 2. When rails 12a and 12b are fully extended, stops 23 engage a surface within base 2, for example the track flanges 25, to prevent further extension that would disengage the extendable mechanism 4 from base 2.

It should be understood that even though the various embodiments show the extendable mechanism 4 comprising two sets of extendable rails 12a-12b and 13a-13b, the mechanism 4 may be simplified to a single set of extendable rails, for example only 12a-12b, or it may comprise an even more complex extendable mechanism arrangement having more than two sets of extendable rails 12a-12b, 13a-13b without departing from the scope of this invention. It is also understood that the outboard position of carriage 3 is related to the number of rail sets provided in a particular extendable mechanism.

As shown in Figures 7 and 8, base 2 further includes a suitable fastening arrangement 33 for attaching the base portion of the present safety seat invention to a vehicle seat. The fastening arrangement 33 is not considered an important feature of the present invention in that any known, or required fastening arrangement may be used to attach the back saver safety seat to a vehicle. Continuous changes in legislated requirements as well as the ever changing state-of-the-art for attaching child safety equipment to vehicles, make it necessary to understand that the present invention is not limited to a particular fastening arrangement

As clearly illustrated in Figures 1-3, the preferred embodiment of the present invention may include a carriage 3 that is rotatably fastened to the expandable mechanism 4 via spindle 30 connected to bearing assembly 29. Surface 34 of carriage 3 is adapted to include a locking mechanism 35 for removably coupling an infant carrier 36 fitted with a corresponding locking mechanism 37. The infant carrier 36 and the corresponding locking mechanisms 35 and 37 are shown in phantom lines because it should be understood that the present back saver safety seat invention may be adapted to fit any infant/child safety seat apparatus that is currently available in the market place, or becomes available in the market place in the future. Exemplary present day infant safety apparatus that may be adapted to the present invention are disclosed above in the "Brief Description of the Related Art."

Additionally, carriage 3 may include a lock device similar to the carriage lock 38 shown in Figures 5 and 6. The exemplary carriage lock includes a bolt 39 attached to carriage 3 and biased in a locking direction to engage a hasp plate 40 and prevent the carriage from being unintentionally rotated. Hasp plate 40 may include a plurality of spaced apart notches 41 for receiving bolt 39 to selectively lock carriage 3 at a rotated position that is convenient to a particular user placing or removing a passenger.

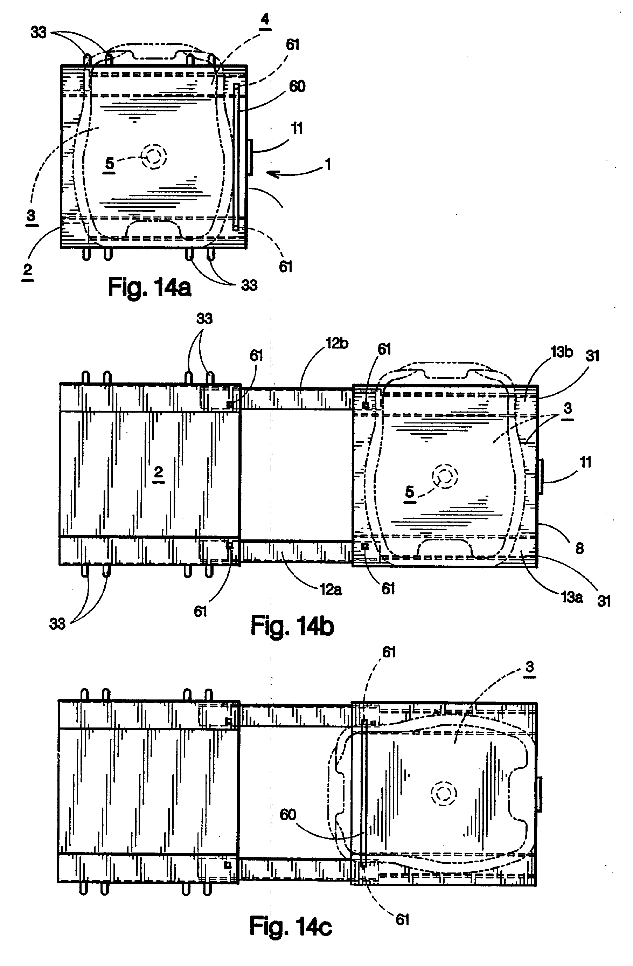

As shown in Figure 14a, an additional lock device, such as a lock bar 60, or other device, is provided to prevent unintentional extension of the carriage mechanism in an outward direction from the base 2. In like manor, as shown in Figure 14b, lock bar 60 may be removed from the strike plate type openings 61 in base 2 and inserted into similar openings in extension mechanism 4 to prevent unintentional movement of carriage 3 when placing or removing a passenger.

Referring to Figures 7 and 8, the base 2 and carriage 3 are substantially symmetrical to enable selective placement on a vehicle seat so that the extendable back saver features of the present safety seat invention may be accessed from either side of a vehicle. Figure 7 shows base 2 fastened to a vehicle seat 44 with straps 45, or any other suitable fastening arrangement, in a direction that places cover 8 in a position where handle 11 may be accessed from the passenger side of a vehicle. In Figure 7, the carriage 3 and coupled infant carrier 36 is shown locked in a riding position. Likewise, Figure 8 shows base 2 fastened to a vehicle seat 44 with straps 45, in a direction that places cover 8 in a position where handle 11 may be accessed from the driver side of a vehicle. In Figure 8, the carriage 3, and coupled infant carrier 36, is also shown locked in a riding position.

Referring to Figures 9 and 10, an alternate embodiment 1a of the present invention, a carriage 46 is shown rotatably attached to a pivot plate 47 in a manner similar to the spindle/bearing arrangement disclosed in the preferred embodiment. Pivot plate 47 is attached to a base 48 by pivot arms 49 that extend along opposite sides of the safety seat. Pivot arms 49 provide means to extend pivot plate 47 outboard from the base unit 48 as shown in Figure 10, and base 48 includes fastening means 33 for attaching the base to a vehicle seat. The drawing also show carriage 46 coupled to an infant carrier 36 that is rotated to a rear facing riding position with the base being accessed from the passenger side of a vehicle.

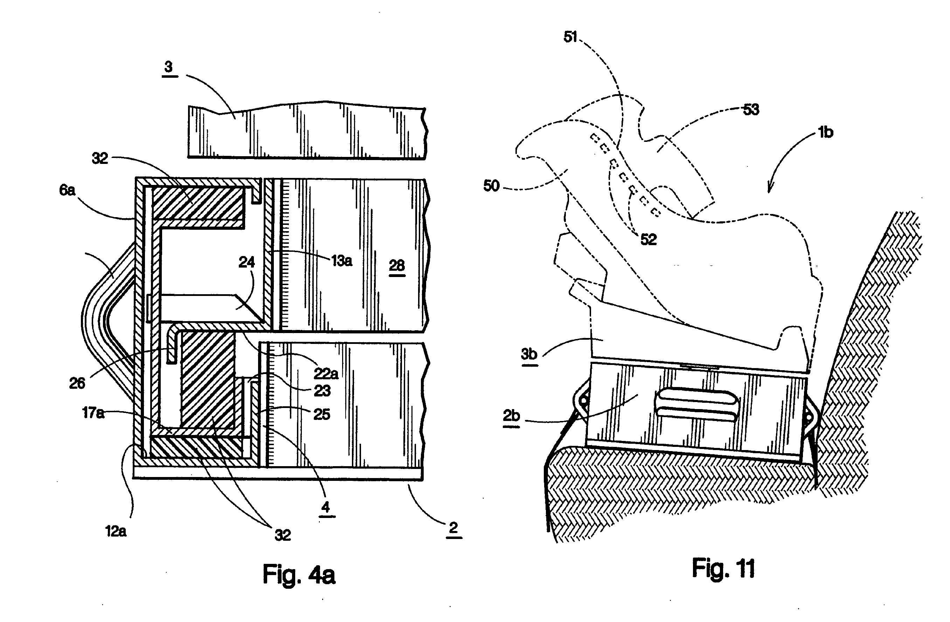

Figure 11 is another alternate embodiment 1b comprising a base 2b rotatably fastened to carriage 3b as disclosed in the preferred embodiments. Carriage 3b is manufactured to couple to an infant safety seat 50 that includes siderails 51 and spaced apart fasteners 52 for receiving an infant restraint apparatus 53 that prevents or reduces head and upper torso injury in a moving vehicle accident as disclosed in applicant's earlier United States patent no. 5,765,893, the disclosure of which is hereby incorporated by reference.

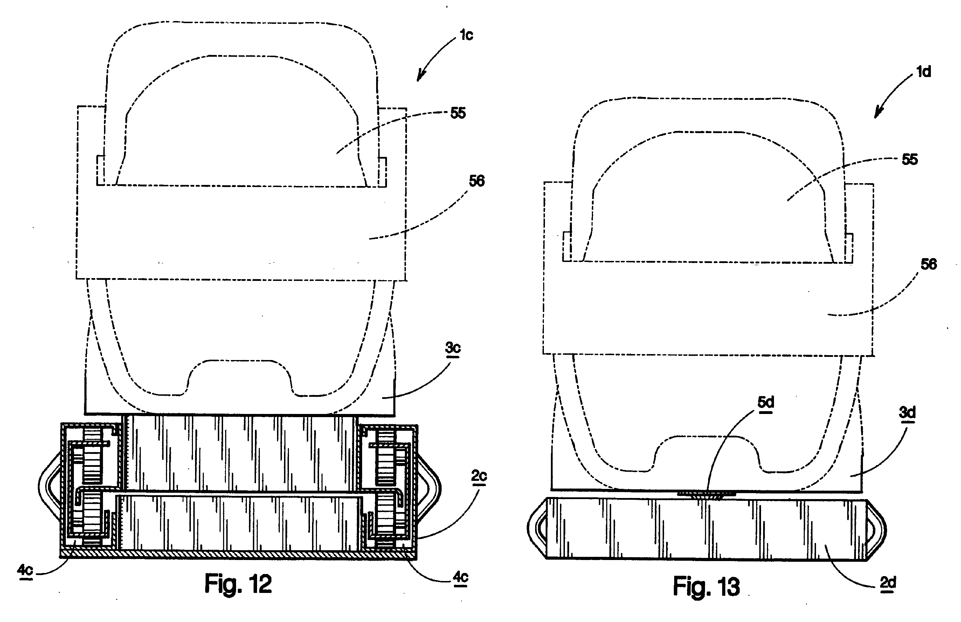

Figure 12 shows another alternate embodiment 1c of the present back saver safety seat invention comprising a base 2c and extendable mechanism 4c similar to the mechanism shown in the preferred embodiment in Figure 1. Alternate embodiment 1c comprises a carriage 3c that is fastened to the extendable mechanism 4c so that carriage 3c is not rotatable from a fixed riding position.

Figure 13 shows another alternate embodiment 1d of the present invention comprising a carriage 3d rotatably attached to a base unit 54 with a spindle/bearing arrangement 5d similar to preferred embodiment. Base 2d does not include an extendable mechanism, and carriage 53 is not extendable in an outward direction from the base.

Referring again to embodiments 1c and 1d a child safety seat 55 is shown in phantom lines so that it is understood the present back saver safety seat invention in Figures 1-13 may be adapted to fit any child safety seat apparatus currently available in the market place today, or any child safety seat apparatus that becomes available in the market place in the future. Additionally, safety seat 55 may include an impact pad device 56 as disclosed in applicant's earlier issued patent United States patent no. 5,800,012, the disclosure of which is hereby incorporated by reference.

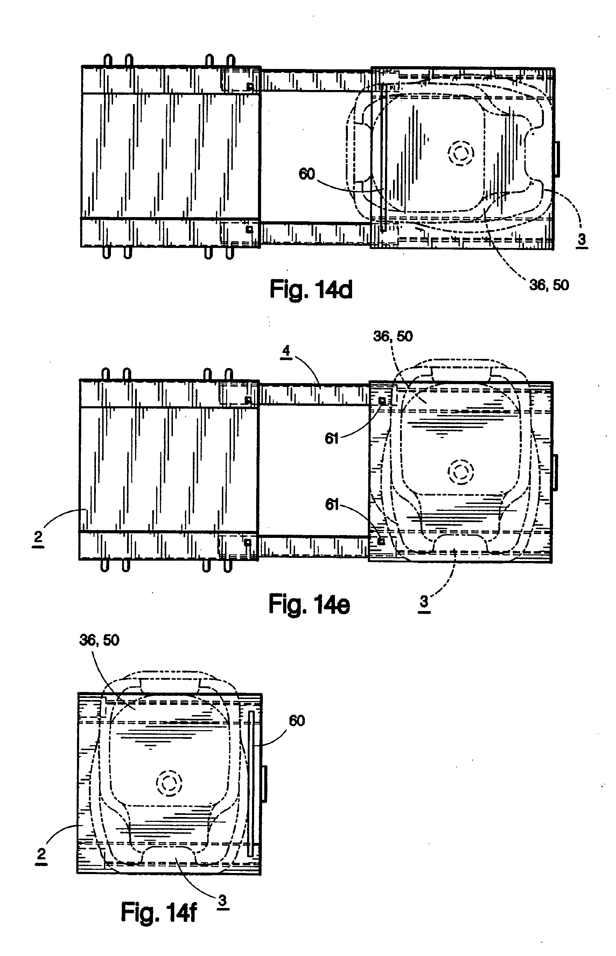

Figures 14a-14f illustrate one sequence of steps that may be used to place an infant into a back saver vehicle safety seat 1. Although the sequence of steps show locking an infant carrier 36 or 50 into carriage 3, it should be understood that the steps for placing older children into a back saver child safety seat (Figures 12 and 13) is similar except for the step that couples the infant carrier to the carriage. It should also be understood the sequence of steps shown in Figures 14a-14f is only exemplary, and a different series of steps may be used to place or remove a passenger without departing from the scope of this invention. Referring to Figures 14 a and 14b, if the carriage 3 is locked to base 2, carriage 3 is unlocked for example removing lock bar 60 from latch openings 61, and the user pulls carriage 3 outward from base 2. As an outward force is applied, the extendable mechanism 4 elongates to the extended position shown in Figure 14b, and carriage 3 is rotated to a loading position that is convenient to the user as shown in Figure 14c. As described above and shown in Figures 6 and 7, a lock device may be provided to secure carriage 3 at a selected loading angle. Lock bar 60 may be inserted into a second of latch holes 61 to prevent unintentional movement of carriage 3 when an infant carrier is being coupled to or uncoupled from carriage 3.

After carriage 3 has been extended to the outboard loading position shown in Figure 14d, a corresponding infant carrier 36 or 50 is coupled to carriage 3. Carriage 3 is unlocked from the selected loading angle and rotated to the riding position where it is locked again to prevent rotation while the vehicle is in motion as shown in Figure 14e. The extendable mechanism 4 is unlocked by removing lock bar 60 from latch openings 61, and the user pushes carriage 3 back to its riding position as the extendable mechanism 4 is retracted back into base housing 2, as shown in Figure 14f. Lock bar 60 is inserted into the first set of latch openings 41 to lock the extendable mechanism 4 and prevent unintentional outward extension of carriage 3 while the vehicle is in motion:

To remove an infant carrier 36 or 50 from carriage 3 steps 14a-14f are substantially reversed. Additionally, rotation of carriage 3 back to the riding position as described and shown in Figure 14e may be carried out after the carriage 3 and infant carrier 36 or 50 have been returned to the riding position shown in Figure 14f. It should also be understood that although Figures 14a-14f show carriage 3 adapted to receive an infant carrier 36 or 50, carriage 3 may be a child's safety seat such as, for example but not limited to, the child safety seat shown in Figures 12 and 13 without departing from the scope of the present invention. It should further be understood that it is intended to include a harness arrangement (not shown) for securely holding an infant/child within an infant carrier or child safety seat used in combination with the present invention, and that any such harness arrangement should comply with federal and/or state regulations.

While this invention has been described as having a preferred design, it is understood that it is capable of further modifications, uses, and/or adaptations following in general the principle of the invention and including such departures from the present disclosure as come within known or customary practice in the art to which the invention pertains, and as may be applied to the essential features set forth herein, and fall within the scope of the invention limited by the appended claims.

## Claims

1. An infant/child vehicle safety seat, comprising:
a base;
a carriage adapted to receive a passenger; and
an extendable mechanism attaching said carriage to said base, said extendable mechanism adapted to move said carriage to an outboard passenger loading position and to a passenger riding position.

2. A safety seat wherein according to claim 1, said carriage is rotatably attached to said base, in particular about a vertical axis.

3. The safety seat recited in claim 1 or 2, wherein said extendable mechanism is a telescopic device that elongates to move said carriage to said outboard passenger loading position and retracts to move said carriage to said riding position.

4. The safety seat recited in any of claims 1 to 3, wherein said extendable mechanism is pivoting device that pivots to move said carriage to said loading position and pivots to move said carriage to said riding position.

5. The safety seat recited in any preceding claim, wherein said carriage is adapted to couple to and uncouple from an infant carrier.

6. The safety seat recited in any preceding claim, herein said infant carriage includes:
a first envelope of support shaped to receive and restrain an infant head against movement;
a second envelope of support shaped to receive and restrain an infant torso against movement, said first envelope of support and said second envelope of support providing
a unified restraint against head and torso movement that causes the head and torso to uniformly react to a sudden change in force.

7. The safety seat recited in any preceding claim, wherein said carriage is adapted to couple to and uncouple from a child safety seat.

8. The safety seat recited in any preceding claim, including:
an impact assembly rotatably attached to the child safety seat, said impact pad assembly being rotatable toward a riding position and toward an impact position;
a bias means that applies a continuous force to rotate said impact pad assembly toward said riding position; and
a lock means that engages said impact pad assembly when said impact pad assembly is rotated to said impact position, said lock means preventing said bias means from rotating said impact pad assembly toward said riding position.

9. The safety seat recited in any preceding claim, including:
a lock to engage and prevent said extendable mechanism from moving said carriage when said carriage is moved to a loading position outboard from said base and/or
a lock to engage and prevent such extendable mechanism from moving said carriage, when said carriage is retracted to a riding position.

10. The safety seat recited in any preceding claim, including a lock to engage said carriage to prevent rotation thereof, in particular at a selected rotated position to prevent further rotation of said carriage.

11. A method for placing a passenger in an infant/child vehicle safety seat, comprising:
moving a carriage adapted to receive a passenger from riding position to an extended outboard loading position;
placing and fastening a passenger into said extended carriage;
moving said carriage from said extended outboard loading position to said riding position.

12. The method recited in claim 11, including the further step of rotating and locking said carriage to a convenient angle selected by a user placing and fastening said passenger into the carriage adapted to receive a passenger.

13. The method recited in claim 11 or 12, including the further step of locking said carriage in the extended outboard loading position to prevent carriage movement.

14. The method recited in any of claims 11 to 13, including the further step or rotating and locking said carriage moved from said extended outboard loading position to said riding position to prevent carriage movement.

15. The method recited in any of claims 11 to 14, wherein the step placing and fastening a passenger into said extended carriage includes coupling an infant carrier to said carriage.
